# EUROPEAN PATENT APPLICATION

(11) **EP 2 849 306 A1**
(43) Date of publication of application: **18.03.2015**
(21) Application number: 13275218.9
(22) Date of filing: 16.09.2013
(51) Int. Cl.: H02J 3/36, H02M 7/483

(54) **Voltage source converter**

(71) Applicant: ALSTOM Technology Ltd, 5400 Baden (CH)
(72) Inventor: Whitehouse, Robert Stephen, Walton on the Hill Stafford ST17 0JU (GB)
(74) Representative: Marshall, Caroline

(57) **Abstract**

A voltage source converter (10) comprises a plurality of converter limbs (20,22), wherein the plurality of converter limbs (20,22) includes:
at least one first converter limb (20) extending between first and second terminals (12,14) and having first and second limb portions separated by a first AC terminal (26), the first and second terminals (12,14) defining a first pair of terminals, each limb portion of the or each first converter limb (20) including a first switching block (28) for switching that limb portion into and out of circuit with the first AC terminal (26), and
a second converter limb (22) extending between third and fourth terminals (16,18) and having first and second limb portions separated by a second AC terminal (30), the third and fourth terminals (16,18) defining a second pair of terminals, each limb portion of the second converter limb (22) including a second switching block (32) for switching that limb portion into and out of circuit with the second AC terminal (30),
the first and third terminals (12,16) being interconnected, the second and fourth terminals (14,18) being interconnected, the first or second pair of terminals being connectable to a DC electrical network (34), each AC terminal (26,30) being connectable to an AC electrical network (36),
wherein the voltage source converter (10) further includes one or more circuit interruption devices (40), a first circuit interruption device (40) interconnecting the first and third terminals (12,16),
each first switching block (28) is switchable in a normal operating mode to control the configuration of the AC voltage at the corresponding first AC terminal (26) and thereby transfer power between AC and DC electrical networks (34,36); and
each of the first and second switching blocks (28,32) is switchable in a circuit interruption mode to modify the flow of current in the voltage source converter (10) in order to cause an alternating current to flow through the or each circuit interruption device (40) and thereby create a current zero in the or each circuit interruption device (40).

## Description

This invention relates to a voltage source converter.

In power transmission networks alternating current (AC) power is typically converted to direct current (DC) power for transmission via overhead lines and/or undersea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC to DC power is also utilized in power transmission networks where it is necessary to interconnect AC electrical networks operating at different frequencies. In any such power transmission network, converters are required at each interface between AC and DC power to effect the required conversion.

HVDC converters are vulnerable to DC side faults or other abnormal operating conditions that can present a short circuit with low impedance across the DC power transmission lines or cables. Such faults can occur due to damage or breakdown of insulation, lightning strikes, movement of conductors or other accidental bridging between conductors by a foreign object.

The presence of low impedance across the DC power transmission lines or cables can be detrimental to a HVDC converter. Sometimes the inherent design of the converter (e.g. the design of the converter based on switching devices that include an anti-parallel connection of an insulated gate bipolar transistor and a diode) means that it cannot limit current under such conditions, resulting in the development of a high fault current exceeding the current rating of the HVDC converter. Such a high fault current not only damages components of the HVDC converter, but also results in the HVDC converter being offline for a period of time. This results in increased cost of repair and maintenance of damaged electrical apparatus hardware, and inconvenience to end users relying on the working of the electrical apparatus. It is therefore important to be able to interrupt the high fault current as soon as it is detected.

A conventional means of protecting a HVDC converter from DC side faults, in cases where the converter control cannot limit the fault current by any other means, is to trip an AC side circuit breaker, thus removing the supply of current that feeds the fault through the HVDC converter to the DC side. This is because there are currently no commercially available HVDC circuit breaker designs. Furthermore, almost all HVDC schemes are currently point-to-point schemes with two HVDC converters connected to the DC side, whereby one HVDC converter acts as a power source with power rectification capability and the other HVDC converter acts as a power load with power inversion capability. Hence, tripping the AC side circuit breaker is acceptable because the presence of a fault in the point-to-point scheme requires interruption of power flow to allow the fault to be cleared.

A new class of HVDC power transmission networks are being considered for moving large quantities of power over long distances, as required by geographically dispersed renewable forms of generation, and to augment existing capabilities of AC power transmission networks with smartgrid intelligence and features that are able to support modern electricity trading requirements.

Such a HVDC power transmission network requires multi-terminal interconnection of HVDC converters, whereby power can be exchanged on the DC side using three or more HVDC converters operating in parallel. Each HVDC converter acts as either a source or sink to maintain the overall input-to-output power balance of the network whilst exchanging the power as required. Faults in the HVDC power transmission network need to be quickly isolated and segregated from the rest of the network in order to enable the network to resume normal power transmission as soon as possible.

Current interruption in conventional AC circuit breakers is carried out when the current reaches a current zero, so as to considerably reduce the difficulty of the interruption task. Thus, in conventional circuit breakers, there is a risk of damage to the current interruption apparatus if a current zero does not occur within a defined time period for interrupting the current. It is therefore inherently difficult to carry out direct current interruption because, unlike AC current in which current zeros naturally occur, direct current cannot naturally reach a current zero.

EP 0 867 998 B1 discloses a solid-state DC circuit breaker comprising a stack of series-connected IGBTs in parallel with a metal-oxide surge arrester. This solution achieves a response time in the range of a few milliseconds but suffers from high steady-state power losses.

According to an aspect of the invention, there is provided a voltage source converter comprising a plurality of converter limbs, wherein the plurality of converter limbs includes:
at least one first converter limb extending between first and second terminals and having first and second limb portions separated by a first AC terminal, the first and second terminals defining a first pair of terminals, each limb portion of the or each first converter limb including a first switching block for switching that limb portion into and out of circuit with the first AC terminal; and
a second converter limb extending between third and fourth terminals and having first and second limb portions separated by a second AC terminal, the third and fourth terminals defining a second pair of terminals, each limb portion of the second converter limb including a second switching block for switching that limb portion into and out of circuit with the second AC terminal,
the first and third terminals being interconnected, the second and fourth terminals being interconnected, the first or second pair of terminals being connectable to a DC electrical network, each AC terminal being connectable to an AC electrical network,
wherein the voltage source converter further includes one or more circuit interruption devices, a first circuit interruption device interconnecting the first and third terminals,
each first switching block is switchable in a normal operating mode to control the configuration of the AC voltage at the corresponding first AC terminal and thereby transfer power between the AC and DC electrical networks, and
each of the first and second switching blocks is switchable in a circuit interruption mode to modify the flow of current in the voltage source converter in order to cause an alternating current to flow through the or each circuit interruption device and thereby create a current zero in the or each circuit interruption device.

During the normal operating mode of the voltage source converter, switching of each first switching block to configure the AC voltage at the respective AC terminal permits interconnection of the AC and DC electrical networks and thereby enables transfer of power between the AC and DC electrical networks. Meanwhile the or each circuit interruption device remains closed and thereby conducts current.

In the event of a fault occurring in the DC electrical network, e.g. a pole-to-pole fault, a high fault current flows from the AC electrical network, through the voltage source converter and into the fault. The fault current must be interrupted in order to prevent the high fault current from damaging components of the voltage source converter. Interruption of the fault current permits isolation and subsequent repair of the fault in order to restore the voltage source converter to normal operating conditions.

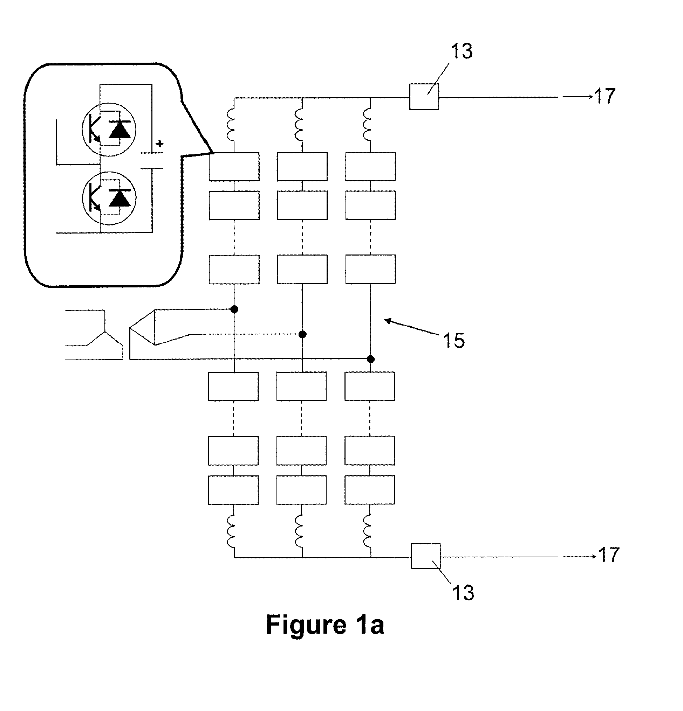

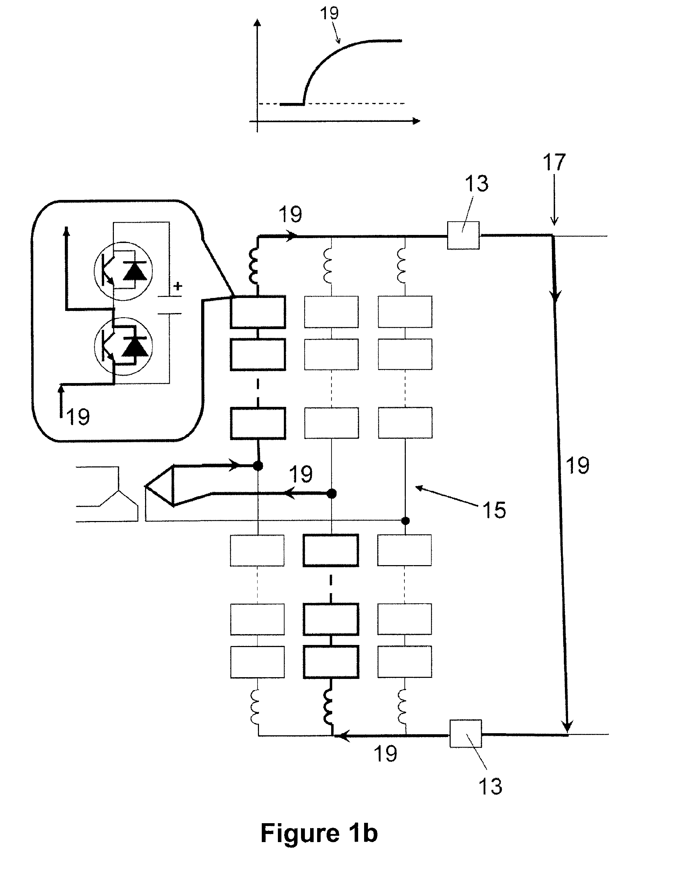

Conventionally one or more circuit interruption devices 13 is connected between the voltage source converter 15 and the DC electrical network 17, for example, as shown in Figure 1a. This conventional configuration prevents a current flowing in the or each circuit interruption device 13 from naturally reaching a current zero, as shown in Figure 1b, and thereby makes it inherently difficult to interrupt the fault current 19 using the or each circuit interruption device 13.

The inventor has found that incorporating the or each circuit interruption device into the voltage source converter in accordance with the invention permits the creation of a forced current zero in the or each circuit interruption device, as follows.

On commencement of the fault, the fault current flows only in a first direction through the or each circuit interruption device when it flows from the AC electrical network, through the voltage source converter, into the fault and then back through the voltage source converter and into the AC electrical network. Such unidirectional flow of the fault current through the or each circuit interruption device prevents the creation of a natural current zero in the or each circuit interruption device.

Thereafter, in the circuit interruption mode of the voltage source converter, each of the first and second switching blocks are switched to form a current path which consists of at least one selected limb portion of the first converter limb(s) and at least one selected limb portion of the second converter limb. The current path provides a route for the fault current to flow from the AC electrical network, through the selected limb portions and back into the AC electrical network. The current path is configured so that the fault current can flow in a second, opposite direction through the or each circuit interruption device, thus causing an alternating current to flow through the or each circuit interruption device. The presence of an alternating current in the or each circuit interruption device in turn permits creation of a forced current zero in the or each circuit interruption device, thus enabling successful current interruption to take place.

Following successful current interruption, each of the first and second switching blocks are then switched to block current. At this stage current stops flowing in the voltage source converter. After the fault has been isolated and repaired, the or each circuit interruption device is then closed and the voltage source converter resumes its normal operating mode.

The arrangement of the or each circuit interruption device between the first and second converter limbs, together with the use of the converter components to modify the flow of current through the or each circuit interruption device, therefore results in a voltage source converter arrangement with reliable current interruption capability. In addition incorporation of the or each circuit interruption device into the voltage source converter results in a compact and robust arrangement of the voltage source converter and the or each circuit interruption device.

Omission of the second converter limb from the voltage source converter means that the fault current can only flow unidirectionally through the or each circuit interruption device, and so a current zero cannot be created in the or each circuit interruption device. Therefore, other types of circuit interruption devices would need to be added to the voltage source converter, or additional equipment, e.g. an oscillatory circuit, would be required to enable the creation of a current zero in the or each circuit interruption device, thus adding to the overall cost and complexity of the voltage source converter. In contrast, in the voltage source converter according to the invention, the use of the converter components to enable the creation of a current zero in the or each circuit interruption device obviates the need for additional equipment and control schemes to enable the creation of a forced current zero in the or each circuit interruption device, thus minimising the cost, size and weight of the voltage source converter.

Furthermore the arrangement of the voltage source converter according to the invention not only makes it straightforward to vary the number of converter limbs to match the requirements of the associated power application, but is also applicable to standard bridge converter topologies without the need for significant change in the design and construction of the bridge converter topologies.

In embodiments of the invention, the voltage source converter may include a second circuit interruption device interconnecting the second and fourth terminals. The inclusion of the second circuit interruption device in the voltage source converter further enhances the current interruption capability of the voltage source converter.

The voltage source device may further include a control unit to selectively switch each first switching block in the normal operating and circuit interruption modes. Optionally the control unit may selectively switch each second switching block in the normal operating and/or circuit interruption modes. This enables rapid and automatic switching of each switching block controlled by the control unit.

Optionally each second switching block may be switchable in the normal operating mode to control the configuration of the AC voltage at the second AC terminal so as to transfer power between the AC and DC electrical networks. The configuration of each second switching block in this manner enables the second converter limb to function in both normal operating and circuit interruption modes. This not only results in a more efficient voltage source converter, but also permits the design and construction of a more compact voltage source converter.

The voltage source converter according to the invention may come in various arrangements depending on the requirements of the associated power application. For example, the number of converter limbs in the voltage source converter may vary according to the number of phases in the associated AC electrical network.

In embodiments of the invention, the voltage source converter may include three converter limbs. The three converter limbs may include two first converter limbs and the second converter limb, each first converter limb extending between the first pair of terminals, the AC terminals of the first and second converter limbs being respectively connectable to a respective phase of a three-phase AC electrical network. In such embodiments, each second switching block is preferably switchable in the normal operating mode to control the configuration of the AC voltage at the second AC terminal so as to transfer power between the AC and DC electrical networks.

In other embodiments of the invention, the voltage source converter may include four converter limbs. The four converter limbs may include three first converter limbs and the second converter limb, each first converter limb extending between the first pair of terminals, the first AC terminals of the first converter limbs being respectively connectable to a respective phase of a three-phase AC electrical network, the second AC terminal of the second converter limb being connected to the first AC terminal of one of the first converter limbs, each second switching block being switchable to selectively inhibit current flow in the respective limb portion in the normal operating mode and permit current flow in the respective limb portion in the circuit interruption mode.

The arrangement of the voltage source converter in this manner means that the second converter limb is not involved in the normal operating mode, i.e. it is not involved in the operation of the voltage source converter to transfer power between the AC and DC electrical networks. This permits simplification of the design and control scheme of the second converter limb.

In such embodiments, each second switching block may include at least one passive current check element. The passive current check element is a device that limits current flow to only one direction, and may be in the form of, for example, a single diode or a plurality of diodes, e.g. a plurality of series-connected diodes.

The use of at least one passive current check element in each second switching block means that current can be inhibited from flowing in the second converter limb in the normal operating mode of the voltage source converter. This is because, in the normal operating mode of the voltage source converter, the voltage of each pole of the DC electrical network is greater than the peak AC voltage of the AC electrical network, and so the or each passive current check element will be reversed-biased and do not conduct.

On the other hand, on commencement of the fault, the voltage of each pole of the DC electrical network drops to zero, and so the or each passive current check element can become forward-biased. This permits the fault current to flow through the second converter limb, and thereby permits flow of an alternating current through the or each circuit interruption device. At this stage the magnitude of the alternating current will be greater than the direct current component feeding the fault, which means that the or each circuit interruption device will be subjected to a forced current zero, thus enabling successful current interruption.

The use of at least one passive current check element in each second switching block therefore removes the need to provide a control scheme to actively control the second converter limb, thus allowing further simplification of the design and construction of the second converter limb.

Different types of circuit interruption devices, in particular AC circuit interruption devices, can be used in the voltage source converter according to the invention. For example, the or each circuit interruption device may be any one of:
- a mechanical circuit interruption device, e.g. gas insulated switchgear, an air-blast switch, a vacuum bottle design-based switch;
- a semiconductor-based circuit interruption device, e.g. a thyristor-based circuit interruption device;
- a pair of semiconductor devices connected in anti-parallel to form a bidirectional circuit interruption device.

The use of semiconductor-based circuit interruption devices allows the voltage source converter to rapidly carry out current interruption in response to occurrence of the fault.

In further embodiments of the invention, the voltage source converter may further include at least one energy conversion element to absorb and/or dissipate energy in the circuit interruption mode. In such embodiments, either or both of the limb portions of the second converter limb may include at least one energy conversion element.

Following successful current interruption, current flowing through the fault in the DC electrical network may be trapped in the inductance of the DC electrical network until it is dissipated by the resistance of the DC electrical network. It could take up to several seconds for the trapped current to fully dissipate.

The use of at least one energy conversion element in the voltage source converter aids dissipation of the trapped current following successful current interruption and thereby lessens the overall time it takes to fully dissipate any current trapped in the inductance of the DC electrical network, thus enhancing the efficiency of the current interruption process.

The or each energy conversion element may be in the form of a energy storage device (e.g. a capacitor) that can be used to absorb the current trapped in the inductance of the DC electrical network. The or each energy conversion element may be in the form of a resistive element (e.g. a surge arrester or a resistor) that can be used to dissipate the current trapped in the inductance of the DC electrical network as heat.

In embodiments of the invention employing the use of at least one energy conversion element, the impedance of the or each energy conversion element may be set at a value which permits the flow of the alternating current through the or each circuit interruption device in the circuit interruption mode. Otherwise a high impedance of the or each energy conversion element might inhibit flow of an alternating current, and thereby prevent creation of a forced current zero, in the or each circuit interruption device in the circuit interruption mode of the voltage source converter.

Each of the first and/or second switching blocks may be configured in different ways to carry out their respective function.

In embodiments of the invention, each of the first and/or second switching blocks may include a single active switching element or a plurality of series-connected active switching elements. Preferably each active switching element includes a semiconductor device.

Each active switching element may be any force-commutated switching element (e.g. a thyristor) or self-commutated switching element (e.g. an insulated gate bipolar transistor or a gate turn-off thyristor).

In further embodiments of the invention, each of the first and/or second switching blocks may include at least one module. The or each module may include at least one active switching element and at least one energy storage device, the or each active switching element and the or each energy storage device combining to selectively provide a voltage source. For example, the or each module may be configured in a half-bridge or full-bridge arrangement. At least one module may, for example, include a pair of active switching elements connected in parallel with the energy storage device in a half-bridge arrangement to define a 2-quadrant unipolar module that can provide zero or positive voltage and can conduct current in two directions. At least one module may, for example, include two pairs of active switching elements connected in parallel with the energy storage device in a full-bridge arrangement to define a 4-quadrant bipolar module that can provide negative, zero or positive voltage and can conduct current in two directions.

In still further embodiments of the invention, at least one switching block including at least one module may be switchable in the circuit interruption mode to selectively provide a voltage source to oppose current flow in the respective limb portion.

The configuration of the voltage source converter in this manner permits use of the or each energy storage device to absorb the current flowing in the inductance of the DC electrical network following successful current interruption, and thereby lessens the overall time it takes to fully dissipate any current trapped in the inductance of the DC electrical network. The absorbed current is then stored as energy in the or each energy storage device.

In embodiments employing the use of at least one active switching element, each switching block or active switching element may be connected in anti-parallel with a passive current check element or a plurality of series-connected passive current check elements.

Preferred embodiments of the invention will now be described, by way of non-limiting examples, with reference to the accompanying drawings in which:
Figure 1a shows, in schematic form, a conventional voltage source converter;
Figure 1b illustrates, in schematic form, the flow of a fault current through the conventional voltage source converter of Figure 1a;
Figure 2a shows, in schematic form, a voltage source converter according to a first embodiment of the invention;
Figure 2b shows, in schematic form, the structure of a module of the voltage source converter of Figure 2a;
Figure 2c illustrates, in schematic form, a circuit interruption mode of the voltage source converter of Figure 2a;
Figure 2d illustrates, in graph form, the changes in voltage and current in the voltage source converter of Figure 2a and the associated AC and DC electrical networks during the current interruption process when each circuit interruption device is a mechanical circuit breaker;
Figure 2e illustrates, in graph form, the changes in voltage and current in the voltage source converter of Figure 2a and the associated AC and DC electrical networks during the current interruption process when each circuit interruption device is a high speed-type circuit breaker;
Figure 3 shows, in schematic form, a voltage source converter according to a second embodiment of the invention;
Figure 4 illustrates, in graph form, the changes in voltage and current in the voltage source converter of Figure 3 and the associated AC and DC electrical networks during the current interruption process;
Figure 5 shows, in schematic form, a voltage source converter according to a third embodiment of the invention;
Figure 6 illustrates, in graph form, the changes in voltage and current in the voltage source converter of Figure 5 and the associated AC and DC electrical networks during the current interruption process;
Figure 7 shows, in schematic form, a voltage source converter according to a fourth embodiment of the invention; and
Figure 8 illustrates, in graph form, the changes in voltage and current in the voltage source converter of Figure 7 and the associated AC and DC electrical networks during the current interruption process.

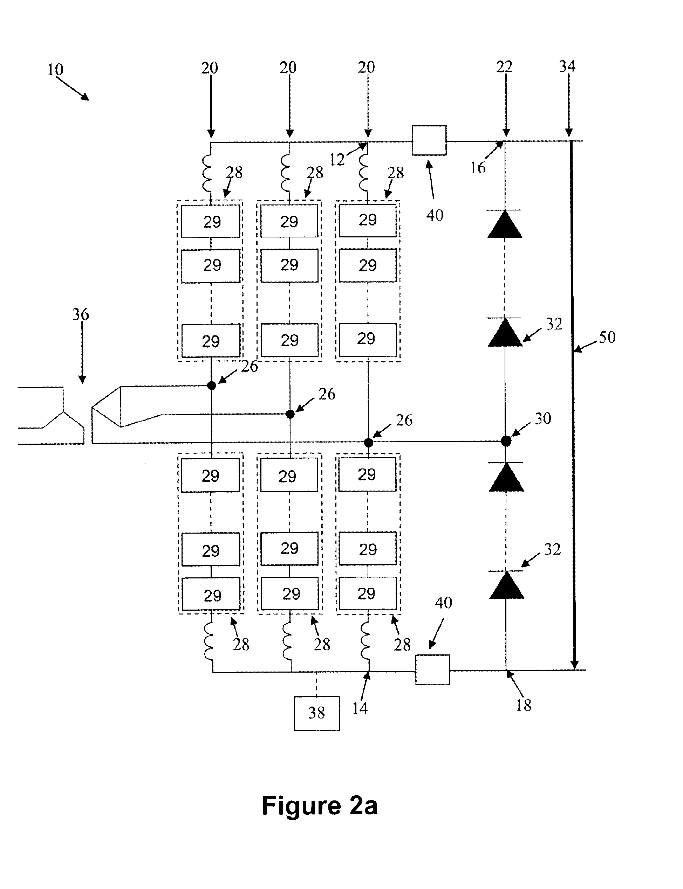

A first voltage source converter 10 according to a first embodiment of the invention is shown in Figure 2a.

The first voltage source converter 10 comprises first, second, third and fourth terminals 12,14,16,18, three first converter limbs 20 and a second converter limb 22.

Each first converter limb 20 extends between the first and second terminals 12,14. Each first converter limb 20 has first and second limb portions separated by a respective first AC terminal 26. Each limb portion of each first converter limb 20 includes a first switching block 28.

The second converter limb 22 extends between the third and fourth terminals 16,18. The second converter limb 22 has first and second limb portions separated by a second AC terminal 30. The second AC terminal 30 is connected to the first AC terminal 26 of one of the first converter limbs 20. Each limb portion of the second converter limb 22 includes a second switching block 32.

The first and second terminals 12,14 define a first pair of terminals, and the third and fourth terminals 16,18 define a second pair of terminals.

In use, the third and fourth terminals 16,18 are respectively connected to positive and negative poles of a DC electrical network 34, while the first AC terminals 26 are respectively connected to a respective phase of a three phase AC electrical network 36.

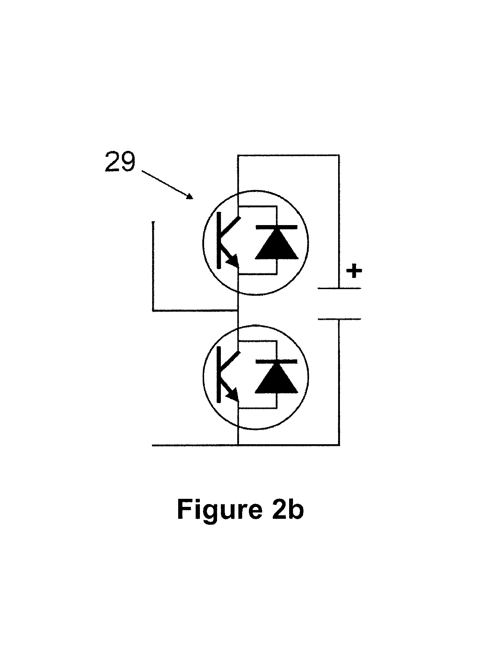

Each first switching block 28 includes a plurality of series-connected modules 29. Each module 29 includes a pair of active switching elements and an energy storage device in the form of a capacitor. The pair of active switching elements are connected in parallel with the capacitor in a half-bridge arrangement, as shown in Figure 2b.

Each active switching element constitutes an insulated gate bipolar transistor (IGBT), which is connected in parallel with an anti-parallel passive current check element in the form of a diode. It is envisaged that, in other embodiments of the invention, each active switching element may be replaced by a plurality of active switching elements, e.g. a plurality of series-connected active switching elements.

It is envisaged that, in other embodiments of the invention, each passive current check element of each first switching block may be replaced by a plurality of passive current check elements, e.g. a plurality of series-connected passive current check elements.

It is envisaged that, in other embodiments of the invention, each capacitor may be replaced by another type of energy storage device that is capable of storing and releasing energy, e.g. a fuel cell or battery.

In each first switching block 28, the plurality of series-connected modules 29 defines a chain-link converter, and the operation of each module 29 in each chain-link converter is described as follows.

The capacitor of the module 29 is selectively bypassed or inserted into the chain-link converter by changing the states of the IGBTs. This selectively directs current through the capacitor or causes current to bypass the capacitor, so that the module 29 provides a zero or positive voltage.

The capacitor of the module 29 is bypassed when the IGBTs are configured to form a short circuit in the module 29. This causes current in the chain-link converter to pass through the short circuit and bypass the capacitor, and so the module 29 provides a zero voltage, i.e. the module 29 is configured in a bypassed mode.

The capacitor of the module 29 is inserted into the chain-link converter when the IGBTs are configured to allow the current in the chain-link converter to flow into and out of the capacitor. The capacitor then charges or discharges its stored energy so as to provide a non-zero voltage, i.e. the module 29 is configured in a non-bypassed mode.

In this manner the IGBTs are connected in parallel with the capacitor in a half-bridge arrangement to define a 2-quadrant unipolar module 29 that can provide zero or positive voltage and can conduct current in two directions, and so each module 29 is capable of selectively providing a voltage source.

It is possible to build up a combined voltage across the chain-link converter, which is higher than the voltage available from each of its individual modules 29 via the insertion of the capacitors of multiple modules 29, each providing its own voltage, into the chain-link converter. In this manner switching of the IGBTs in each module 29 causes the chain-link converter to provide a stepped variable voltage source, which permits the generation of a voltage waveform across the chain-link converter using a step-wise approximation. As such the chain-link converter is capable of providing a wide range of complex voltage waveforms.

Each second switching block 32 includes a plurality of series-connected passive current check elements, each passive current check element being in the form of a diode. It is envisaged that, in other embodiments of the invention, the plurality of series-connected passive current check elements of each second switching block may be replaced by a single passive current check element.

It is also envisaged that, in other embodiments of the invention, each passive current check element of each second switching block may be replaced by an active switching element or a plurality of active switching elements, e.g. a plurality of series-connected active switching elements. The or each active switching element may be any force-commutated switching element (e.g. a thyristor) or self-commutated switching element (e.g. a gate turn-off thyristor).

The first voltage source converter 10 further includes a control unit 38 to selectively switch each first switching block 28.

The first voltage source converter 10 further includes two circuit interruption devices 40. A first circuit interruption device 40 interconnects the first and third terminals 12,16, and a second interruption device interconnects the second and fourth terminals 14,18. In this manner each circuit interruption device 40 is connected between the second converter limb 22 and one of the first converter limbs 20.

Each circuit interruption device 40 is in the form of a mechanical circuit breaker, as typically used in AC circuit interruption applications.

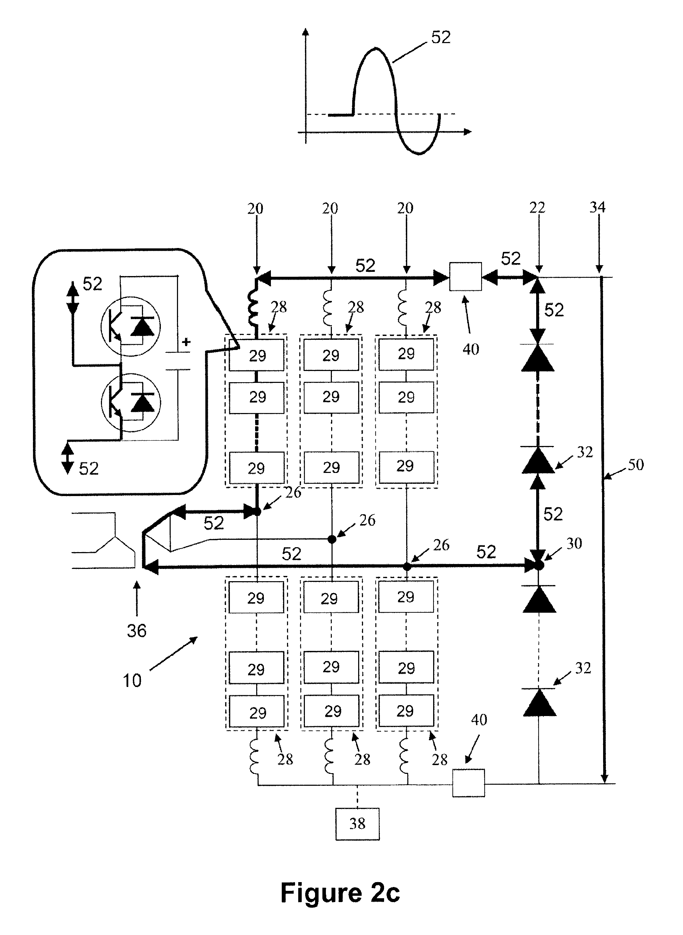

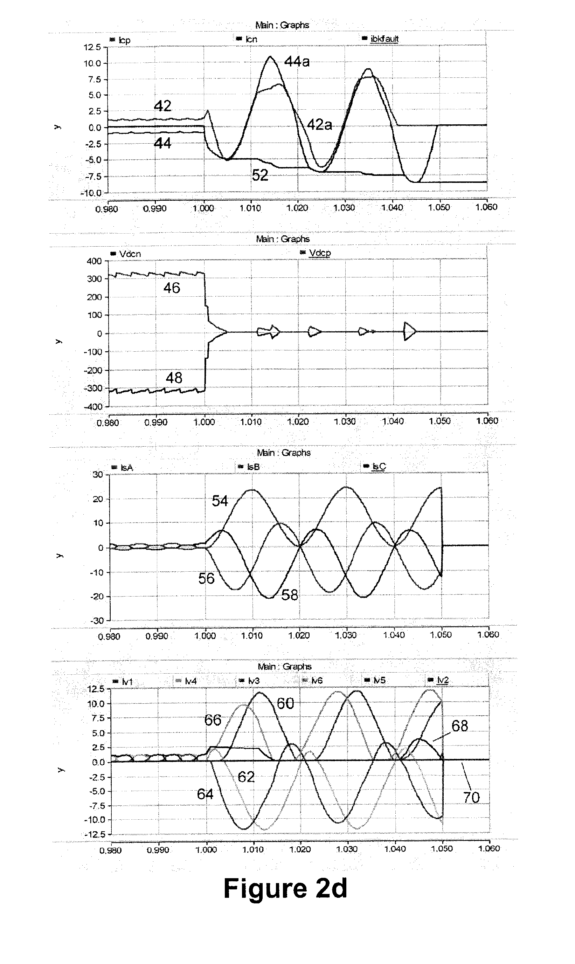

Operation of the first voltage source converter 10 of Figure 2a is described as follows, with reference to Figures 2c and 2d.

During a normal operating mode of the first voltage source converter 10, the control unit 38 switches each first switching block 28 to selectively switch the respective limb portion into and out of circuit with the corresponding first AC terminal 26, and thereby control the configuration of the AC voltage at the respective first AC terminal 26 to permit interconnection of the AC and DC electrical networks 34,36. More specifically, the control unit 38 selectively controls the switching of the IGBTs of each module 29 of each first switching block 28 to control the configuration of the AC voltage at the respective first AC terminal 26 to permit interconnection of the AC and DC electrical networks 34,36. This enables transfer of power between the AC and DC electrical networks 34,36. Meanwhile each circuit interruption device 40 remains closed and thereby conducts current 42,44 in one direction only.

Each passive current check element of each second switching block 32 is arranged so that current is inhibited from flowing in the second converter limb 22 in the normal operating mode of the first voltage source converter 10. Since the voltage 46,48 of each pole of the DC electrical network 34 is greater than the peak AC voltage of the AC electrical network 36 in the normal operating mode of the first voltage source converter 10, each passive current check element of each second switching block 32 is arranged so that it is reversed-biased and therefore does not conduct current in the normal operating mode of the first voltage source converter 10.

In the event of a pole-to-pole fault 50 occurring in the DC electrical network 34, a high fault current flows from the AC electrical network 36, through the first voltage source converter 10 and into the fault 50. The fault current must be interrupted in order to prevent the high fault current from damaging components of the first voltage source converter 10. Interruption of the fault current permits isolation and subsequent repair of the fault 50 in order to restore the first voltage source converter 10 to normal operating conditions.

The fault current flows from the AC electrical network 36, through the first voltage source converter 10, into the fault 50 and then back through the first voltage source converter 10 and into the AC electrical network 36. More particularly, the fault current flows through one of the passive current check elements in each module 29 of multiple first switching blocks 28 of the first converter limbs 20. This causes the fault current to flow only in a first direction through each of the first and second circuit interruption devices 40. Such unidirectional flow of the fault current through each circuit interruption device 40 prevents the creation of a natural current zero in each circuit interruption device 40.

On the other hand, on commencement of the fault 50, each passive current check element of each second switching block 32 can become forward-biased, as a result of the voltage 46,48 of each pole of the DC electrical network 34 dropping to zero. This thereby permits the fault current 52 to flow through the second converter limb 22.

In response to occurrence of the fault 50 in the DC electrical network 34, the first voltage source converter 10 is controlled to operate in a circuit interruption mode.

In the circuit interruption mode, the control unit 38 switches the first switching blocks 28 of the first converter limbs 20 to form a current path consisting of multiple selected limb portions, the selected limb portions consisting of at least one selected limb portion of the second converter limb 22 and at least one selected limb portion of the first converter limbs 20. The current path is configured to provide a route for the fault current 52 to flow from the AC electrical network 36, through the selected limb portions and back into the AC electrical network 36 so that the fault current 52 can flow in a second, opposite direction through either or both of the first and second circuit interruption devices 40. Therefore, the fault current 52 can be directed to flow in a particular current path in the first voltage source converter 10 (e.g. through the passive current check elements of the first limb portion of the second converter limb 22 and through the IGBTs of the first switching block 28 of the first limb portion of one of the first converter limbs 20, as shown in Figure 2c).

Figure 2d illustrates, in graph form, the changes in voltage and current in the voltage source converter of Figure 2a and the associated AC and DC electrical networks during the current interruption process when the current path is configured such that the fault current 52 flows in a second, opposite direction through both of the first and second circuit interruption devices 40. Modifying the flow of current in the first voltage source converter 10 in this manner causes an alternating current 42a,44a to flow through each circuit interruption device 40. In the circuit interruption mode, the magnitude of the alternating current 42a,44a will be greater than the direct current component feeding the fault 50, which means that the circuit interruption devices 40 will be subjected to a forced current zero. The presence of an alternating current 42a,44a in the circuit interruption devices 40 in turn permits creation of a forced current zero in the circuit interruption devices 40. The circuit interruption devices 40 can then be opened to interrupt current.

Once the circuit interruption devices 40 are opened to interrupt current, the control unit 38 switches each first switching block 28 to block current. As a result current stops 60,62,64,66,68,70 flowing in each limb portion of the first converter limbs 20, and the AC phase currents 54,56,58 stops flowing in the first AC terminals 26 of the first converter limbs 20. It can be seen from Figure 2d that the time it takes to successfully interrupt current is approximately 40 ms following occurrence of the fault 50 in the DC electrical network 34.

After the fault 50 has been isolated and repaired, the circuit interruption devices 40 is then closed and the first voltage source converter 10 resumes its normal operating mode.

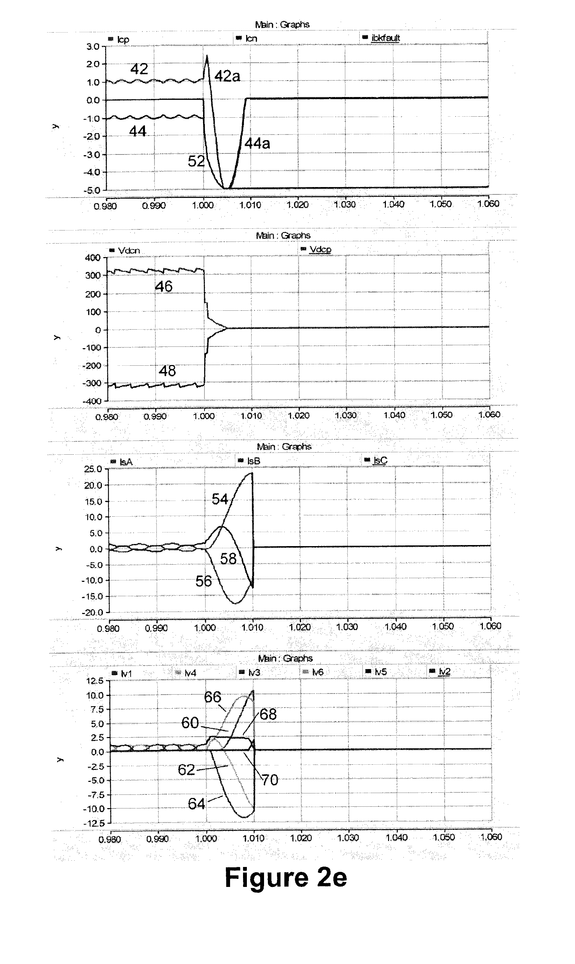

Figure 2e illustrates, in graph form, the changes in voltage and current in the first voltage source converter 10 of Figure 2a and the associated AC and DC electrical networks 34,36 during the current interruption process when each circuit interruption device 40 is a high speed-type circuit breaker and when the current path is configured such that the fault current 52 flows in a second, opposite direction through both of the first and second circuit interruption devices 40. It can be seen from Figure 2e that the use of the high speed-type circuit breaker results in a improved voltage source converter response (approximately 10ms) which is faster than the voltage source converter response based on the mechanical circuit breaker, as shown in Figure 2d.

The arrangement of the first and second circuit interruption devices 40 between the first and second converter limbs 20,22, together with the use of the converter components to modify the flow of current through either or both of the circuit interruption devices 40, therefore results in a voltage source converter arrangement with reliable current interruption capability. In addition incorporation of each circuit interruption device 40 into the first voltage source converter 10 results in a compact and robust arrangement of the first voltage source converter 10 and each circuit interruption device 40.

Omission of the second converter limb 22 from the first voltage source converter 10 means that the fault current can only flow unidirectionally through each circuit interruption device 40, and so a current zero cannot be created in each circuit interruption device 40. Therefore, other types of circuit interruption devices would need to be added to the first voltage source converter 10, or additional equipment, e.g. an oscillatory circuit, would be required to enable the creation of a current zero in each circuit interruption device 40, thus adding to the overall cost and complexity of the first voltage source converter 10. In contrast, in the first voltage source converter 10 of Figure 2a, the use of the converter components to enable the creation of a current zero in each circuit interruption device 40 obviates the need for additional equipment and control schemes to enable the creation of a forced current zero in each circuit interruption device 40, thus reducing the cost, size and weight of the first voltage source converter 10.

Furthermore the arrangement of the first voltage source converter 10 of Figure 2a not only makes it straightforward to vary the number of converter limbs 20,22 to match the requirements of the associated power application, but is also applicable to standard bridge converter topologies without the need for significant change in the design and construction of the bridge converter topologies.

The arrangement of the first voltage source converter 10 of Figure 2a means that the second converter limb 22 is not involved in the normal operating mode, i.e. it is not involved in the operation of the first voltage source converter 10 to transfer power between the AC and DC electrical networks 34,36. This permits simplification of the design and control scheme of the second converter limb 22.

It is envisaged that, in other embodiments of the invention, each module 29 may be replaced by another type of module 29 that includes at least one switching element and at least one energy storage device, the or each switching element and the or each energy storage device in the or each module 29 combining to selectively provide a voltage source. For example, each module 29 may include two pairs of switching elements connected in parallel with an energy storage device in a full-bridge arrangement to define a 4-quadrant bipolar module 29 that can provide negative, zero or positive voltage and can conduct current in two directions.

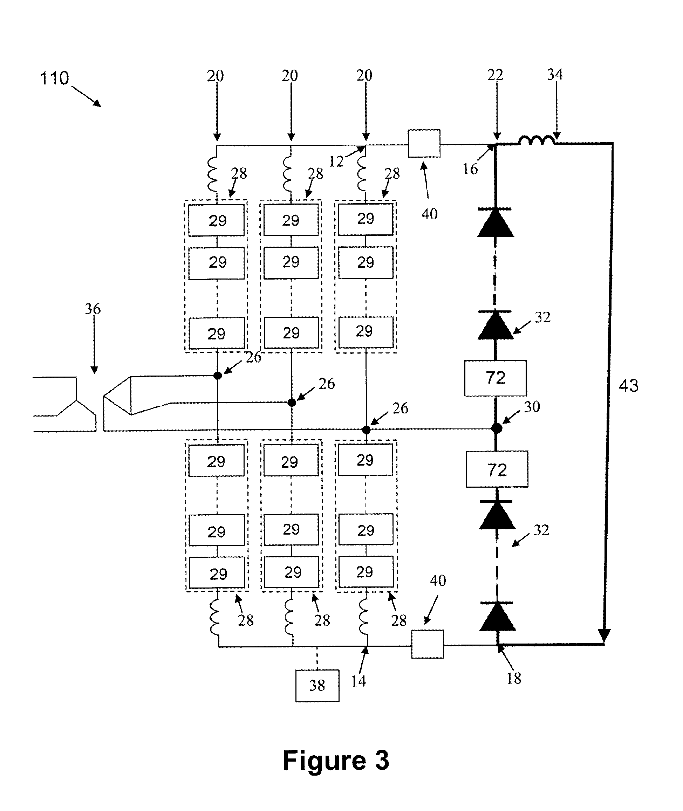

A second voltage source converter 110 according to a second embodiment of the invention is shown in Figure 3. The structure and operation of the second voltage source converter 110 of Figure 3 is similar to that of the first voltage source converter 10 of Figure 2a, and like features share the same reference numerals.

The second voltage source converter 110 differs from the first voltage source converter 10 in that, in the second voltage source converter 110, each limb portion of the second converter limb 22 further includes an energy conversion element 72 in the form of a surge arrester.

The impedance of each energy conversion element 72 is set at a value which permits the flow of the alternating current through each circuit interruption device 40 in the circuit interruption mode. Otherwise a high impedance of each energy conversion element 72 might inhibit flow of an alternating current, and thereby prevent creation of a forced current zero, in each circuit interruption device 40 in the circuit interruption mode of the second voltage source converter 110.

Following successful current interruption, current 43 flowing through the fault 50 in the DC electrical network 34 may be trapped in the inductance of the DC electrical network 34 until it is dissipated by the resistance of the DC electrical network 34. It could take up to several seconds for the trapped current 43 to fully dissipate.

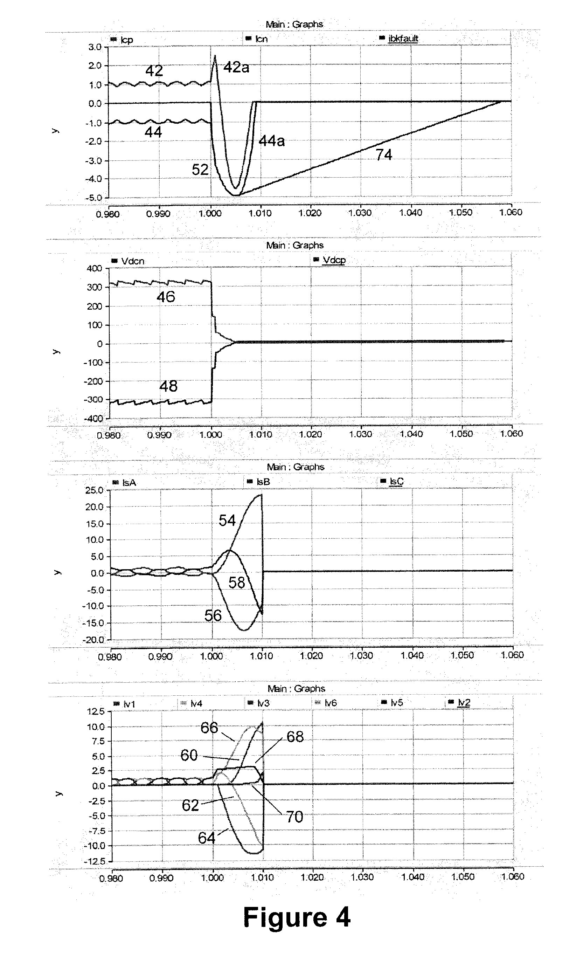

Figure 4 illustrates, in graph form, the changes in voltage and current in the second voltage source converter 110 of Figure 3 and the associated AC and DC electrical networks 34,36 during the current interruption process when the current path is configured such that the fault current 52 flows in a second, opposite direction through both of the first and second circuit interruption devices 40. It can be seen from Figure 4 that the changes in voltage and current in the second voltage source converter 110 of Figure 3 and the associated AC and DC electrical networks 34,36 are virtually identical to the changes in voltage and current in the first voltage source converter 10 of Figure 2a and the associated AC and DC electrical networks 34,36 as shown in Figure 2e, except that the current dissipation following current interruption as shown in Figure 4 occurs at a faster rate 74 than the current dissipation following current interruption in Figure 2e.

The use of the energy conversion elements 72 in the second voltage source converter 110 aids dissipation of the fault current following successful current interruption and thereby lessens the overall time it takes to fully dissipate any current 43 trapped in the inductance of the DC electrical network 34, thus enhancing the efficiency of the current interruption process.

It is envisaged that, in other embodiments of the invention, each energy conversion element may be any type of device that is capable of absorbing and/or dissipating electrical energy. For example, each energy conversion element may be a resistor that can be used to dissipate any current trapped in the inductance of the DC electrical network as heat. It is also envisaged that, in other embodiments of the invention, the second voltage source converter may include at least one additional energy conversion element which is located anywhere in the second voltage source converter other than the second converter limb.

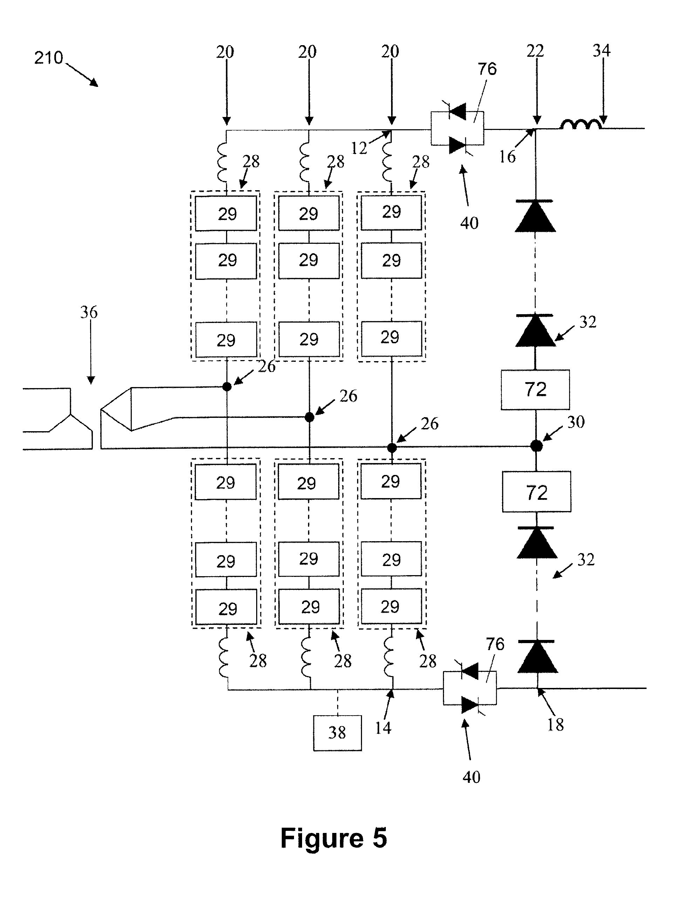

A third voltage source converter 210 according to a third embodiment of the invention is shown in Figure 5. The structure and operation of the third voltage source converter 210 of Figure 5 is similar to that of the second voltage source converter 110 of Figure 3, and like features share the same reference numerals.

The third voltage source converter 210 differs from the second voltage source converter 110 in that, in the third voltage source converter 210, each mechanical circuit breaker is replaced by a pair of thyristors 76 connected in anti-parallel to form a bidirectional semiconductor-based circuit interruption device 40.

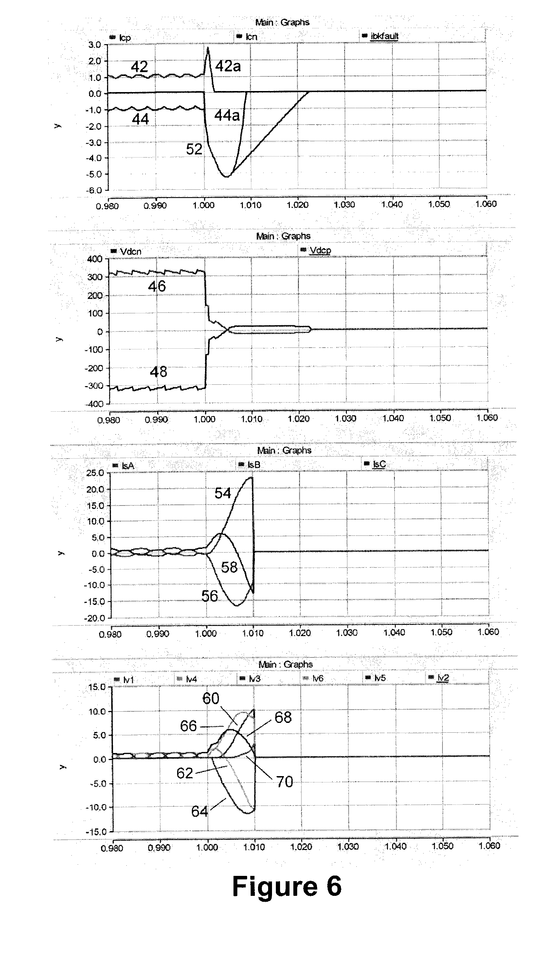

The non-mechanical nature of the semiconductor-based circuit interruption devices 40 allows the third voltage source converter 210 to rapidly carry out current interruption, typically in less than one fundamental frequency cycle, in response to occurrence of the fault 50. This can be seen from Figure 6 that the use of semiconductor-based circuit interruption devices 40 result in an improved voltage source converter response (approximately 10ms) which is faster than the voltage source converter response based on the mechanical breaker, as shown in Figure 2d, and is comparable to the voltage source converter response based on the high speed-type mechanical breaker, as shown in Figures 2e and 4.

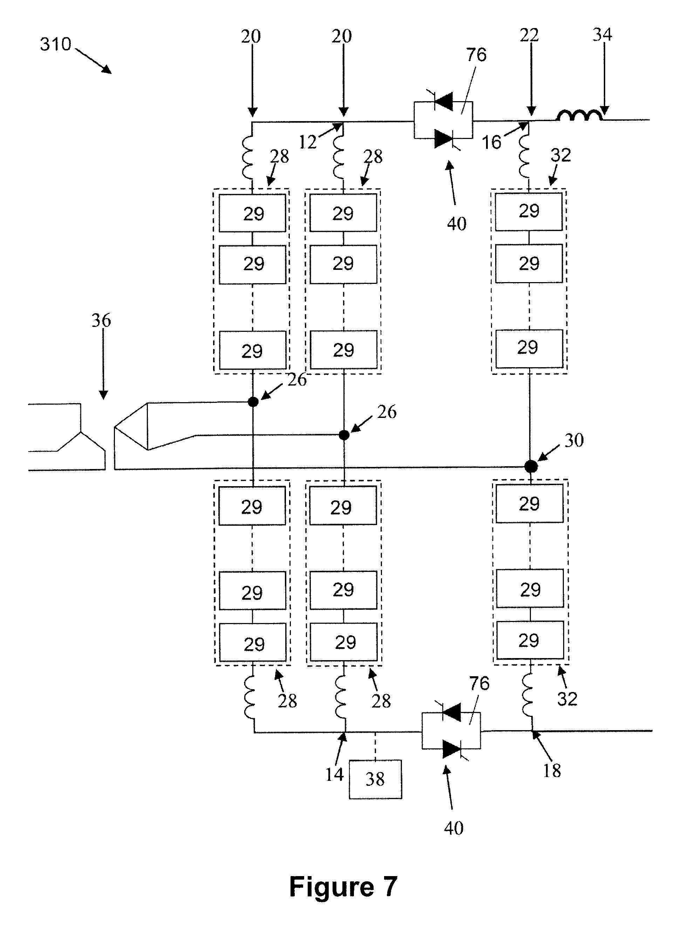

A fourth voltage source converter 310 according to a fourth embodiment of the invention is shown in Figure 7. The structure and operation of the fourth voltage source converter 310 of Figure 7 is similar to that of the third voltage source converter 210 of Figure 5, and like features share the same reference numerals.

The fourth voltage source converter 310 differs from the third voltage source converter 210 in that::
- the fourth voltage source converter 310 includes two first converter limbs 20 and the second converter limb 22;
- the second AC terminal 30 is not connected to the first AC terminal 26 of any of the first converter limbs 20;
- in use, the AC terminals 26,30 of the first and second converter limbs 20,22 are being respectively connected to a respective phase of a three-phase AC electrical network 36;
- the plurality of series-connected passive current check elements of each second switching block 32 is replaced by a plurality of series-connected modules 29, each module 29 of each second switching block 32 being similar in structure and operation to each module 29 of each first switching block 28;
- the control unit 38 is configured to selectively switch each second switching block 32;
- each limb portion of the second converter limb 22 omits the energy conversion element 72.

During the normal operating mode of the fourth voltage source converter 310, the control unit 38 switches each of the first and second switching blocks 28,32 to selectively switch the respective limb portion into and out of circuit with the corresponding AC terminal 26,30, and thereby control the configuration of the AC voltage at the respective AC terminal 26,30 to permit interconnection of the AC and DC electrical networks 34,36. More specifically, the control unit 38 selectively controls the switching of the IGBTs of each module 29 of each of the first and second switching blocks 28,32 to control the configuration of the AC voltage at the respective AC terminal 26,30 to permit interconnection of the AC and DC electrical networks 34,36. This enables transfer of power between the AC and DC electrical networks 34,36. Meanwhile each circuit interruption device 40 remains closed and thereby conducts current in one direction only.

In the circuit interruption mode, the control unit 38 switches the first and second switching blocks 28 of the first converter limbs 20 to form a current path consisting of multiple selected limb portions, the selected limb portions consisting of at least one selected limb portion of the second converter limb 22 and at least one selected limb portion of the first converter limbs 20. The current path is configured to provide a route for the fault current to flow from the AC electrical network 36, through the selected limb portions and back into the AC electrical network 36 so that the fault current can flow in a second, opposite direction through either or both of the first and second circuit interruption devices 40. Therefore, the fault current can be directed to flow in a particular current path in the fourth voltage source converter 310 (e.g. through the anti-parallel diodes of the second converter limb 22 and through the IGBTs of the first switching block 28 of at least one limb portion of the first converter limbs 20).

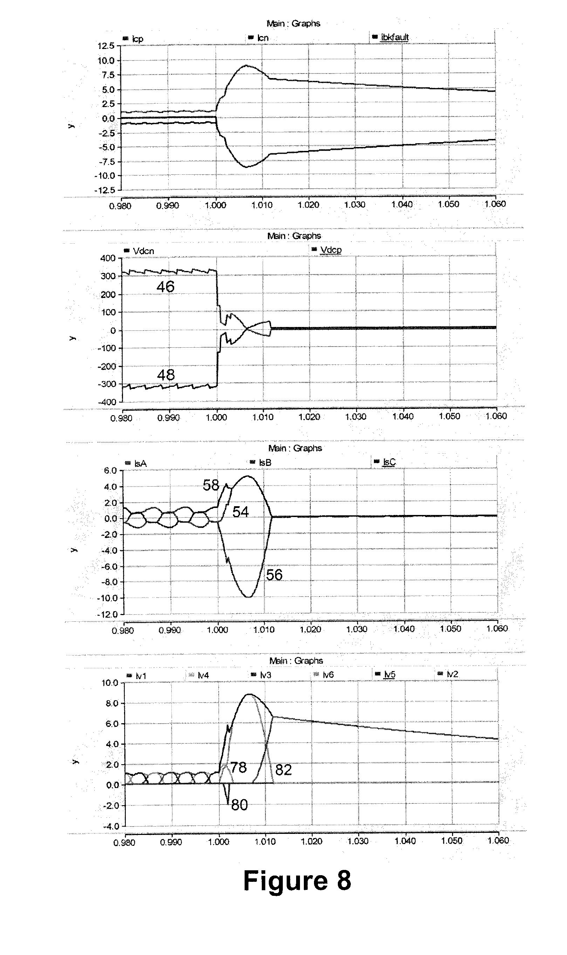

Figure 8 illustrates, in graph form, the changes in voltage and current in the voltage source converter of Figure 7 and the associated AC and DC electrical networks during the current interruption process when the current path is configured such that the fault current flows in a second, opposite direction through both of the first and second circuit interruption devices 40. Modifying the flow of current in the fourth voltage source converter 310 in this manner causes an alternating current to flow through each circuit interruption device 40. I n the circuit interruption mode the magnitude of the alternating current will be greater than the direct current component feeding the fault 50, which means that each circuit interruption device 40 will be subjected to a forced current zero. The presence of an alternating current in each circuit interruption device 40 in turn permits creation of a forced current zero in each circuit interruption device 40. Each circuit interruption device 40 can then be opened to interrupt current.

Once each circuit interruption device 40 is opened to interrupt current, the control unit 38 switches each of the first and second switching blocks 32 to block current. As a result current 78,80,82 stops flowing in each limb portion of the first converter limbs 20 and the AC phase currents 54,56,58 stop flowing in the first AC terminals 26 of the first converter limbs 20, as shown in Figure 8.

After the fault 50 has been isolated and repaired, each circuit interruption device 40 is then closed and the fourth voltage source converter 310 resumes its normal operating mode.

The configuration of the fourth voltage source converter 310 to enable the second converter limb 22 to function in both normal operating and circuit interruption modes not only results in a more efficient voltage source converter 310, but also permits the design and construction of a more compact voltage source converter 310.

It is further envisaged that, in other embodiments of the invention, at least one switching block including at least one module may be switchable in the circuit interruption mode to selectively provide a voltage source to oppose current flow in the respective limb portion.

The configuration of the voltage source converter in this manner permits use of the or each energy storage device to absorb the current flowing in the inductance of the DC electrical network 34 following successful current interruption, and thereby lessens the overall time it takes to fully dissipate any current trapped in the inductance of the DC electrical network 34. The absorbed current is then stored as energy in the or each energy storage device.

It is also envisaged that, in other embodiments of the invention, each voltage source converter 10,110,210,310 may include either of the first and second circuit interruption devices 40, instead of both.

It is further envisaged that, in other embodiments of the invention, each switching block may include at least one switching element, preferably connected in series between the corresponding AC and DC terminals. In such embodiments, the or each switching element of each switching block may be switchable to switch the corresponding limb portion into and out of circuit with the respective AC terminal.

## Claims

1. A voltage source converter comprising a plurality of converter limbs, wherein the plurality of converter limbs includes:
at least one first converter limb extending between first and second terminals and having first and second limb portions separated by a first AC terminal, the first and second terminals defining a first pair of terminals, each limb portion of the or each first converter limb including a first switching block for switching that limb portion into and out of circuit with the first AC terminal; and
a second converter limb extending between third and fourth terminals and having first and second limb portions separated by a second AC terminal, the third and fourth terminals defining a second pair of terminals, each limb portion of the second converter limb including a second switching block for switching that limb portion into and out of circuit with the second AC terminal,
the first and third terminals being interconnected, the second and fourth terminals being interconnected, the first or second pair of terminals being connectable to a DC electrical network, each AC terminal being connectable to an AC electrical network,
wherein the voltage source converter further includes one or more circuit interruption devices, a first circuit interruption device interconnecting the first and third terminals,
each first switching block is switchable in a normal operating mode to control the configuration of the AC voltage at the corresponding first AC terminal and thereby transfer power between the AC and DC electrical networks, and
each of the first and second switching blocks is switchable in a circuit interruption mode to modify the flow of current in the voltage source converter in order to cause an alternating current to flow through the or each circuit interruption device and thereby create a current zero in the or each circuit interruption device.

2. A voltage source converter according to Claim 1 wherein the voltage source converter includes a second circuit interruption device interconnecting the second and fourth terminals.

3. A voltage source converter according to any preceding claim wherein the voltage source device further includes a control unit to selectively switch each first switching block in the normal operating and circuit interruption modes.

4. A voltage source converter according to Claim 3 wherein the control unit selectively switches each second switching block in the normal operating and/or circuit interruption modes.

5. A voltage source converter according to any preceding claim wherein each second switching block is switchable in the normal operating mode to control the configuration of the AC voltage at the second AC terminal so as to transfer power between the AC and DC electrical networks.

6. A voltage source converter according to any preceding claim including three converter limbs, wherein the three converter limbs include two first converter limbs and the second converter limb, each first converter limb extending between the first pair of terminals, the AC terminals of the first and second converter limbs being respectively connectable to a respective phase of a three-phase AC electrical network.

7. A voltage source converter according to any of Claims 1 to 4 including four converter limbs, wherein the four converter limbs include three first converter limbs and the second converter limb, each first converter limb extending between the first pair of terminals, the first AC terminals of the first converter limbs being respectively connectable to a respective phase of a three-phase AC electrical network, the second AC terminal of the second converter limb being connected to the first AC terminal of one of the first converter limbs, each second switching block being switchable to selectively inhibit current flow in the respective limb portion in the normal operating mode and permit current flow in the respective limb portion in the circuit interruption mode.

8. A voltage source converter according to Claim 7 wherein each second switching block includes at least one passive current check element.

9. A voltage source converter according to any preceding claim wherein the or each circuit interruption device is any one of:
• a mechanical circuit interruption device;
• a semiconductor-based circuit interruption device;
• a pair of semiconductor devices connected in anti-parallel to form a bidirectional circuit interruption device.

10. A voltage source converter according to any preceding claim wherein the voltage source converter further includes at least one energy conversion element to absorb and/or dissipate energy in the circuit interruption mode.

11. A voltage source converter according to Claim 10 wherein either or both of the limb portions of the second converter limb includes at least one energy conversion element.

12. A voltage source converter according to Claim 10 or Claim 11 wherein the impedance of the or each energy conversion element is set at a value which permits the flow of the alternating current through the or each circuit interruption device in the circuit interruption mode.

13. A voltage source converter according to any preceding claim wherein each of the first and/or second switching blocks includes a single active switching element or a plurality of series-connected active switching elements.

14. A voltage source converter according to any preceding claim wherein each of the first and/or second switching blocks includes at least one module, the or each module including at least one active switching element and at least one energy storage device, the or each active switching element and the or each energy storage device combining to selectively provide a voltage source.

15. A voltage source converter according to any preceding claim wherein at least one switching block including at least one module is switchable in the circuit interruption mode to selectively provide a voltage source to oppose current flow in the respective limb portion.

16. A voltage source converter according to any of Claims 13 to 15 wherein each switching block or active switching element is connected in anti-parallel with a passive current check element or a plurality of series-connected passive current check elements.
